# FASCICULE DE BREVET EUROPEEN

(11) **EP 2 931 560 B1**
(45) Date de publication et mention de la délivrance du brevet: **24.04.2019**
(21) Numéro de dépôt: 13815432.3
(22) Date de dépôt: 12.12.2013
(51) Int. Cl.: B60R 5/04

(54) **TABLETTE CENTRALE ET SYSTÈME DE MONTAGE À LIBERATION AUTOMATIQUE DE LA TABLETTE**
KOFFERRAUMABDECKUNG UND MONTAGESYSTEM MIT AUTOMATISCHEN ENTRIEGELN DER ABDECKUNG
LUGGAGE COVER AND MOUNTING SYSTEM WITH AN AUTOMATIC LIBERATION OF THE COVER

(30) Priorité: 17.12.2012 FR 1262112
(43) Date de publication de la demande: 21.10.2015
(73) Titulaire: Renault s.a.s., 92100 Boulogne-Billancourt (FR)
(72) Inventeur: BOUILLON, Jean Charles, F-78940 La Queue des Yvelines (FR); HALNA, Lionel, F-93130 Noisy Le Sec (FR)
(86) Numéro de dépôt international: PCT/EP2013/076393
(87) Numéro de publication internationale: WO 2014/095570

(56) Documents cités:
- EP-A1- 0 234 497
- EP-A1- 1 059 203
- EP-A1- 1 642 776
- EP-A2- 1 447 278
- DE-A1- 10 242 339
- DE-A1- 10 252 490
- FR-A3- 2 929 898
- JP-A- 2011 037 412

## Description

### Domaine technique de l'invention

L'invention concerne un véhicule automobile avec un système de montage d'une tablette centrale escamotable destinée à couvrir au moins partiellement un coffre arrière d'un véhicule automobile, comprenant des premiers éléments de fixation solidaires de la tablette et des deuxièmes éléments de fixation solidaires du véhicule coopérant entre eux de sorte à assurer un maintien de la tablette relativement au véhicule à distance d'un plancher de coffre.

La tablette centrale escamotable est destinée à couvrir au moins partiellement un coffre arrière d'un véhicule automobile, ainsi qu'un agencement comprenant une telle tablette et/ou un tel système de montage et qu'un véhicule automobile muni d'un tel agencement.

### État de la technique

On connaît déjà des tablettes centrales aussi appelées tablettes arrière destinées à recouvrir un coffre dans un véhicule automobile. La tablette centrale est montée sur le véhicule de sorte à être soutenue à distance du plancher du véhicule. Une telle tablette s'étend classiquement parallèlement au plancher, depuis l'arrière du dossier des sièges jusqu'à un hayon de fermeture du coffre. Cette tablette ferme l'ouverture supérieure du coffre et occulte donc le contenu de ce dernier. Généralement, elle est montée de manière escamotable.

Pour conférer une telle possibilité d'escamotage de la tablette, un système de montage de la tablette permet couramment :
- un pivotement de la tablette entre une position abaissée de repos lorsque le hayon est fermé et une position inclinée par pivotement lorsque le hayon est ouvert,
- et/ou une libération de la tablette vers le dessus de sorte à pouvoir la démonter et libérer l'espace au-dessus du coffre.

Une première catégorie concerne les tablettes rigides. Si elles permettent avantageusement d'entreposer des objets d'un poids modéré sur elles-mêmes, elles présentent l'inconvénient de leur encombrement, de leur coût et de leur manque de modularité.

Une deuxième catégorie concerne les tablettes munies d'un rideau mobile susceptible d'être déployé depuis un enrouleur fixé latéralement dans le coffre. Mais un tel système d'enrouleur est coûteux et fragile et des solutions alternatives ont été développées.

Une troisième catégorie concerne ainsi des tablettes formant cache bagage avec des éléments rigides (cadre, barres ou équivalents) agencés de sorte à supporter une toile souple ou assimilé, montée entre les éléments rigides. Mais de telles tablettes présentent l'inconvénient de leur fragilité dans le cas où un objet est placé sur la toile souple : le placement d'un objet sur la toile de la tablette est susceptible de provoquer une détérioration irréversible de la toile, par exemple par une déformation et/ou un déchirement irréversible de celle-ci.

Un véhicule selon la préambule de la revendication 1 est divulgué par JP 2011 037412 A.

### Objet de l'invention

Le but de la présente invention est de proposer une solution de montage d'une tablette centrale escamotable sur un véhicule automobile qui remédie aux inconvénients listés ci-dessus.

Notamment, un objet de l'invention est de fournir une solution supprimant les risques de détérioration de la tablette centrale, tout en étant économique, légère, simple et flexible.

Ces objectifs sont atteints par un véhicule selon revendication 1. Un système de montage d'une tablette centrale escamotable destinée à couvrir au moins partiellement un coffre arrière d'un véhicule automobile comprend des premiers éléments de fixation solidaires de la tablette et des deuxièmes éléments de fixation solidaires du véhicule coopérant entre eux de sorte à assurer un maintien de la tablette relativement au véhicule à distance d'un plancher de coffre, le système de montage étant configuré de sorte à automatiquement mettre fin à la coopération entre les premiers et deuxièmes éléments de fixation afin de libérer la tablette en cas d'application sur la tablette d'un effort supérieur à une valeur seuil prédéterminée choisie de sorte à garantir que l'application sur la tablette de tout effort inférieur à ladite valeur seuil ne détériore pas la tablette.

Les premiers éléments de fixation et/ou les deuxièmes éléments de fixation sont configurés de sorte à se déformer élastiquement, depuis une configuration naturelle occupée en cas de coopération entre les premiers et deuxièmes éléments de fixation, d'une manière assurant un l'interruption de ladite coopération entre les éléments premiers et deuxièmes éléments de fixation dès qu'un effort supérieur à la valeur seuil est appliqué à la tablette.

Les premiers et deuxièmes éléments de fixation peuvent être configurés de sorte à réaliser un montage de la tablette la laissant libre à pivotement par rapport au véhicule dans les deuxièmes éléments de fixation.

Les premiers et deuxièmes éléments de fixation sont configurés de sorte à assurer un montage réversible de la tablette de sorte que la tablette peut être libérée complètement des deuxièmes éléments de fixation indépendamment dudit effort appliqué à la tablette.

Les premiers éléments de fixation comprennent au moins une languette de fixation en matériau élastiquement déformable engagée dans un logement de réception correspondant appartenant aux deuxièmes éléments de fixation, le module d'élasticité du matériau constitutif de ladite languette de fixation étant configuré de sorte que l'application sur la tablette d'un effort supérieur ou égal à ladite valeur seuil provoque une déformation élastique de ladite languette de fixation assurant un désengagement de la languette de fixation hors du logement de réception.

Le logement peut comprendre une empreinte et la languette présente une saillie, la saillie et l'empreinte présentant des formes complémentaires telle que la saillie de la languette vient se loger dans l'empreinte du logement dans une première configuration angulaire donnée de la tablette par rapport au véhicule destinée à être occupée en cas de fermeture d'un hayon du véhicule.

Ces objectifs sont atteints aussi par la fourniture d'une tablette centrale escamotable destinée à couvrir au moins partiellement un coffre arrière d'un véhicule automobile, comprenant les premiers éléments de fixation appartenant au système de montage, ces premiers éléments de fixation étant configurés pour assurer une liaison escamotable par rapport aux deuxièmes éléments de fixation solidaires du véhicule pour tout effort appliqué à la tablette ayant une valeur supérieure à ladite valeur seuil prédéterminée.

La tablette peut comprendre un élément occultant souple fixé, sur un premier bord longitudinal de la tablette, à un élément rigide de support tel qu'une barre, et encadré sur le reste de son pourtour par un cadre élastiquement déformable agencé le long des bords transversaux opposés et du deuxième bord longitudinal de la tablette.

Les premiers éléments de fixation peuvent être agencés au niveau des extrémités transversales opposées de l'élément rigide de support, de sorte à être destinés à coopérer avec les deuxièmes éléments de fixation aménagés sur les parois latérales du coffre en regard l'une de l'autre transversalement au véhicule.

La tablette centrale peut comprendre un élément d'accrochage, notamment agencé sur le deuxième bord longitudinal de la tablette, destiné à être raccordé au hayon du véhicule pour réaliser une liaison de la tablette au hayon configurée de telle sorte qu'un soulèvement du hayon provoque un pivotement de la tablette, à partir de ladite première configuration angulaire vers une deuxième configuration angulaire, par rapport aux deuxièmes éléments de fixation autour d'un axe passant par l'élément rigide de support.

Un agencement comprend une telle tablette centrale et/ou un tel système de montage assurant le montage escamotable de la tablette centrale sur un véhicule automobile.

Un véhicule automobile comprend un tel agencement.

### Description sommaire des dessins

D'autres avantages et caractéristiques ressortiront plus clairement de la description qui va suivre de modes particuliers de réalisation de l'invention donnés à titre d'exemples non limitatifs et représentés sur les dessins annexés, dans lesquels :
- la figure 1 est une vue en perspective d'un exemple de tablette centrale entrant dans le cadre d'un système de montage selon l'invention,
- la figure 2 est une vue locale en coupe selon un plan longitudinal-latéral de la tablette centrale, au niveau de ses premiers éléments de fixation,
- les figures 3 à 5 représentent le système de montage selon une coupe selon un plan longitudinal-vertical passant par les premiers et deuxièmes éléments de fixation, respectivement dans un état pivoté de la tablette, dans un état en cours de libération de la tablette et dans un état non pivoté de la tablette au repos,
- et la figure 6 est une vue en perspective des deuxièmes éléments de fixation du système de montage.

### Description de modes préférentiels de l'invention

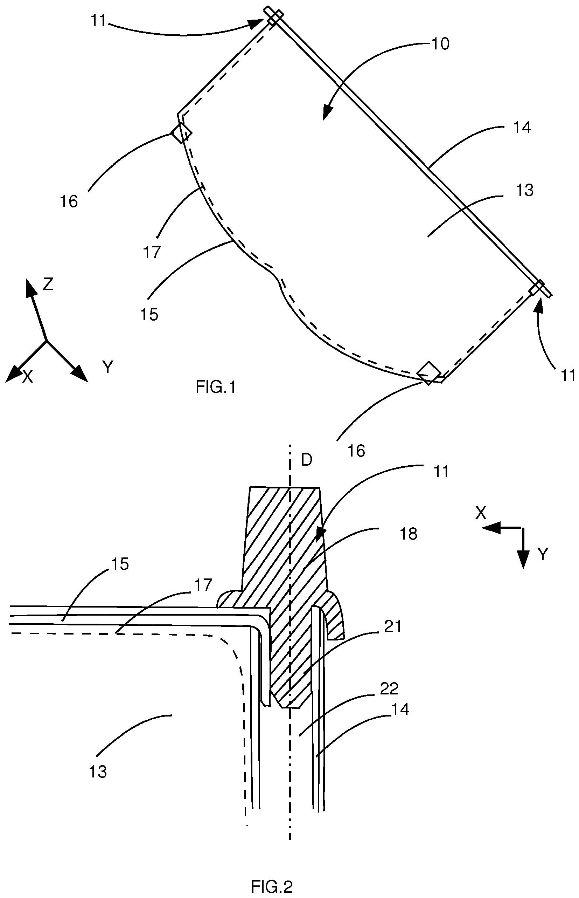

Les figures 1 à 6 sont relatives à un exemple de système de montage d'une tablette centrale escamotable selon l'invention.

Pour une meilleure clarté, un référentiel orthogonal tridimensionnel (X, Y, Z) est localement associé à la tablette centrale 10, aussi connue sous la dénomination « tablette arrière ». Les directions X, Y, Z sont respectivement nommées « longitudinale », « latérale », « transversale ». Elles sont destinées à respectivement être orientées, en fonctionnement, selon les directions longitudinale, latérale et verticale classiquement associée à un véhicule automobile.

La figure 1 représente une tablette centrale 10 escamotable destinée à couvrir au moins partiellement un coffre arrière d'un véhicule automobile.

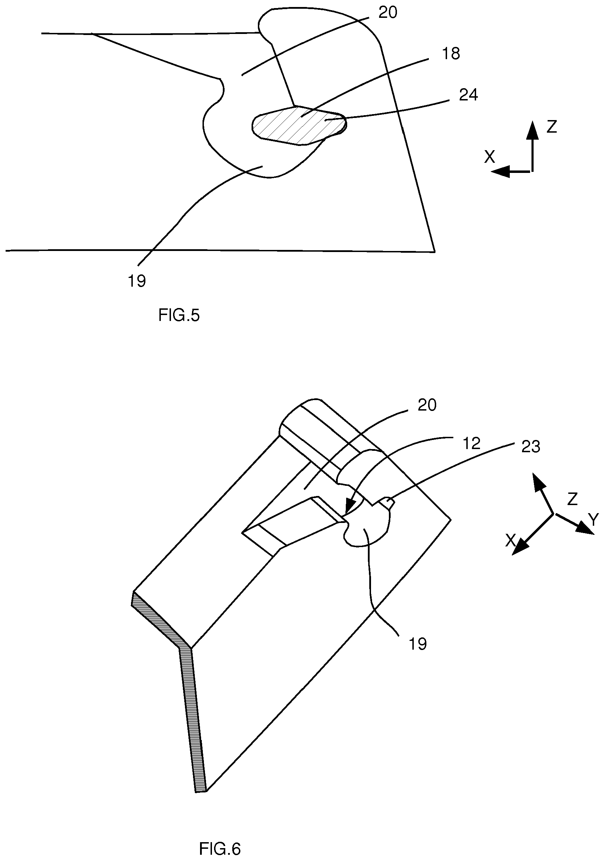

De manière générale, un aspect de l'invention concerne un système de montage de la tablette centrale 10 sur le véhicule automobile. A cet effet, le système de montage comprend des premiers éléments de fixation 11 solidaires de la tablette 10 et des deuxièmes éléments de fixation 12 (figure 6) solidaires du véhicule. Ces premiers et deuxièmes éléments de fixation 11, 12 sont configurés de sorte à pouvoir coopérer entre eux d'une manière permettant d'assurer, en cas de coopération, un maintien de la tablette 10 relativement au véhicule, à une distance donnée selon Z par rapport au plancher de coffre

Selon une caractéristique essentielle, le système de montage est configuré de sorte à automatiquement mettre fin à la coopération entre les premiers et deuxièmes éléments de fixation 11, 12 afin de libérer la tablette centrale 10 en cas d'application sur la tablette 10 d'un effort (ayant au moins une composante selon Z notamment dirigée vers le bas) supérieur à une valeur seuil prédéterminée. Cette valeur seuil sera notamment choisie, par une configuration idoine des premiers et deuxièmes éléments de fixation 11, 12, de sorte à garantir que l'application sur la tablette 10 de tout effort selon Z vers le bas inférieur à ladite valeur seuil ne détériore pas la tablette 10. L'application d'un tel effort extérieur vers le bas selon Z peut notamment résulter du dépôt d'un objet sur la tablette 10, en raison de son poids notamment.

La tablette 10 comprend un élément occultant 13 souple fixé, sur un premier bord longitudinal de la tablette 10 orienté selon Y (notamment le bord longitudinal de la tablette destiné à venir du côté des dossiers des sièges), à un élément rigide de support 14 tel qu'une barre, et encadré sur le reste de son pourtour par un cadre 15 élastiquement déformable, par exemple de manière à être replié sur lui-même pour diminuer son encombrement, agencé le long des bords transversaux (orientés selon X) opposés et du deuxième bord longitudinal de la tablette 10 (orienté selon Y). Le deuxième bord longitudinal de la tablette 10 correspond au bord destiné à venir du côté du hayon. L'élément occultant 13 est une toile souple ou un moyen équivalent.

Les premiers éléments de fixation 11 sont agencés au niveau des extrémités transversales opposées selon Y de l'élément rigide de support 14, de sorte à être destinés à coopérer avec les deuxièmes éléments de fixation 12 aménagés sur les parois latérales du coffre en regard l'une de l'autre transversalement au véhicule selon Y. Les deuxièmes éléments de fixation 12 sont notamment agencés sur des éléments de garniture latéraux du coffre.

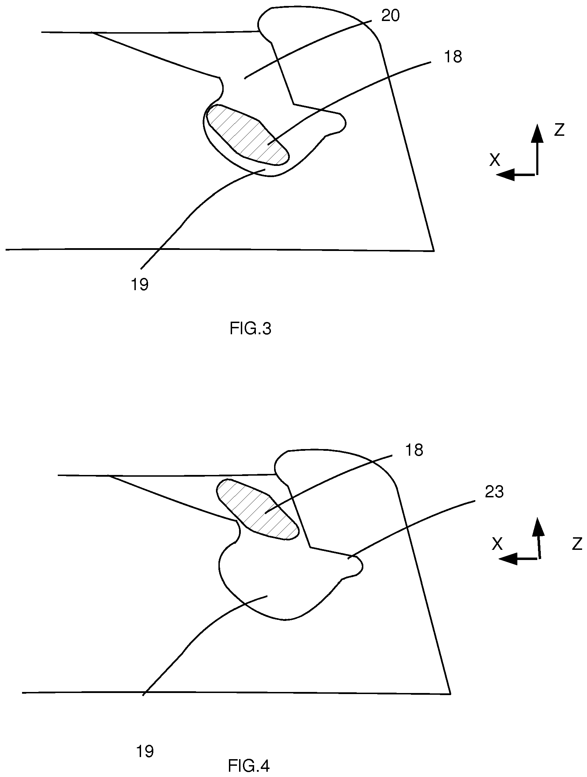

D'autre part, la tablette 10 comprend un élément d'accrochage 16, notamment agencé sur le deuxième bord longitudinal de la tablette. L'élément d'accrochage 16 est destiné à être raccordé au hayon du véhicule pour réaliser une liaison de la tablette 10 au hayon configurée de telle sorte qu'un soulèvement du hayon provoque un pivotement de la tablette, à partir d'une première configuration angulaire (figure 5 : état non pivoté occupé au repos de la tablette, en position fermée du hayon) vers une deuxième configuration angulaire (figure 3 : état pivoté d'environ 45° occupé par la tablette en position ouverte du hayon), par rapport aux deuxièmes éléments de fixation 12 autour d'un axe D passant par l'élément rigide de support 14.

Pour renforcer la fixation de l'élément occultant 13, il est possible de coudre à sa périphérie un galon 17 plié en U autour du cadre 15. Autour de l'élément rigide de support 14, il est possible de prévoir son recouvrement directement par le tissu 13 et de le fermer par une couture transversale le long de l'élément rigide de support 14.

Pour réaliser un système de montage selon l'invention, les premiers éléments de fixation 11 et/ou les deuxièmes éléments de fixation 12 sont configurés de sorte à se déformer de manière élastique, depuis une configuration naturelle occupée en cas de coopération entre les premiers et deuxièmes éléments de fixation 1, 12, d'une manière assurant un l'interruption de leur coopération dès qu'un effort supérieur à la valeur seuil est appliqué à la tablette 10. Il peut d'ailleurs être prévu que la liaison entre l'élément d'accrochage 16 et le hayon soit automatiquement débrayée sous les mêmes conditions.

Avantageusement, les premiers et deuxièmes éléments de fixation 11, 12 sont configurés de sorte à réaliser un montage de la tablette 10 de sorte que :
- la tablette 10 est laissée libre à pivotement autour de Y par rapport au véhicule dans les deuxièmes éléments de fixation 12, autour de l'axe D (figures 3 et 5),
- et/ou le montage soit réversible de sorte que la tablette 10 peut être libérée complètement des deuxièmes éléments de fixation 12 indépendamment de tout effort appliqué à la tablette 10 selon Z vers le bas (figure 4 : les premiers éléments de fixation 11 peuvent s'échapper des deuxièmes éléments de fixation 12 par un phénomène expressément commandé par l'utilisateur, différent de celui décrit précédemment en relation avec la libération automatique de la tablette 10 sous la charge appliquée.

Dans une variante particulière telle qu'illustrée, c'est la tablette 10 qui comprend les premiers éléments de fixation 11 configurés pour assurer une liaison escamotable par rapport à des deuxièmes éléments de fixation solidaires du véhicule pour tout effort appliqué à la tablette 10 ayant une valeur supérieure à une valeur seuil prédéterminée. Une disposition inverse ou complémentaire peut toutefois être prévue, avec un aménagement adapté des deuxièmes éléments de fixation 12.

Ainsi dans cette variante, les premiers éléments de fixation 11 comprennent au moins une languette de fixation 18 en matériau élastiquement déformable prévue pour s'engager dans un logement de réception 19 correspondant appartenant aux deuxièmes éléments de fixation 12. Le module d'élasticité du matériau constitutif de la languette de fixation 18 est configuré de sorte que l'application sur la tablette 10 d'un effort supérieur ou égal à la valeur seuil provoque une déformation élastique de la languette de fixation 18 assurant un désengagement de la languette de fixation 18 hors du logement de réception 19.

Le montage réversible de la tablette 10 lui permettant d'être libérée complètement des deuxièmes éléments de fixation 12 indépendamment de tout effort appliqué à la tablette 10 selon Z vers le bas, par un phénomène expressément commandé par l'utilisateur, peut être obtenu par l'aménagement d'une fente 20 ouvrant le logement 19 vers l'extérieur du logement 19 selon une direction incluse dans un plan (X, Z), notamment globalement dirigée selon Z vers le dessus. Ainsi, la libération de la tablette 10 se fait par un déplacement des languettes 18 (figure 4) le long des fentes 20 pour les extraire hors des logements 19. La mise en coopération des premiers et deuxièmes éléments de fixation 11, 12 est obtenue par un déplacement inverse des languettes 18 le long des fentes 20, suivant un sens allant de l'extérieur vers l'intérieur des logements 19.

Chaque languette de fixation 18 peut être formée comme une partie d'un embout destiné à être rapporté à une extrémité donnée de l'élément rigide de support 14. Pour cela, l'embout peut comporter une autre partie constitutive d'un tenon d'emmanchement 21 à emboîter à force ou par vissage par exemple dans un trou complémentaire 22 formé dans l'extrémité correspondante de l'élément rigide de support 14.

Avantageusement, le logement 19 comprend une empreinte 23 orientée selon X, en direction de l'arrière du véhicule. La languette 18 présente une saillie 24, la saillie et l'empreinte présentant des formes complémentaires telle que la saillie 24 de la languette 18 vient se loger dans l'empreinte 23 du logement 19 dans la première configuration angulaire donnée (figure 5) de la tablette 10 par rapport au véhicule destinée à être occupée en cas de fermeture d'un hayon du véhicule. Cette caractéristique particulière procure un effet de calage qui permet de s'affranchir d'éventuelles vibrations de la tablette 10 susceptibles sinon d'apparaitre durant l'utilisation du véhicule. Pour l'engagement de la saillie 24 dans l'empreinte 23, la tablette 10 est mise en tension selon la direction X sous l'effet d'une poussée exercée sur la tablette par le hayon au niveau des deux butées caoutchouc 16 fixées sur les coins du deuxième bord longitudinal. Cette position dans les coins permet de transférer les efforts en X directement par les deux bords transversaux du cadre 15 jusqu'aux doigts 11 et cela sans déformer le cadre 15. Ainsi la toile 13 garde son tendu esthétique.

L'invention porte enfin d'une part sur un agencement qui comprend une telle tablette centrale 10 et/ou un tel système de montage assurant le montage escamotable de la tablette centrale 10 sur le véhicule automobile et d'autre part sur un véhicule automobile comprenant un tel agencement.

Bien que le principe de décrochement automatique de la tablette centrale de coffre en cas d'application d'un effort, en Z vers le bas, au moins supérieur à une valeur seuil trouve une application avantageuse dans le cadre d'une tablette à toile souple afin de conserver l'intégrité de cette dernière indépendamment des conditions de charge, ce principe selon l'invention peut être appliqué à n'importe quel type de tablette, rigide ou non, repliable ou non.

## Revendications

1. Véhicule automobile comprenant un agencement comprenant :
- une tablette centrale (10) escamotable destinée à couvrir au moins partiellement un coffre arrière du véhicule automobile, et
- un système de montage de la tablette, le système comprenant des premiers éléments de fixation (11) solidaires de la tablette et des deuxièmes éléments de fixation (12) solidaires du véhicule, les premiers et deuxièmes éléments coopérant entre eux de sorte à assurer un maintien de la tablette relativement au véhicule à distance d'un plancher de coffre, le système de montage étant configuré de sorte à automatiquement mettre fin à la coopération entre les premiers et deuxièmes éléments de fixation afin de libérer la tablette en cas d'application sur la tablette d'un effort supérieur à une valeur seuil prédéterminée choisie de sorte à garantir que l'application sur la tablette de tout effort selon une direction orientée en fonctionnement selon la direction verticale associée au véhicule, dirigé vers le bas et inférieur à ladite valeur seuil ne détériore pas la tablette, le véhicule étant **caractérisé en ce que** les premiers éléments de fixation comprennent au moins une languette de fixation (18) en matériau élastiquement déformable engagée dans un logement de réception (19) correspondant appartenant aux deuxièmes éléments de fixation, le module d'élasticité du matériau constitutif de ladite languette de fixation étant configuré de sorte que l'application sur la tablette d'un effort supérieur ou égal à ladite valeur seuil provoque une déformation élastique de ladite languette de fixation assurant un désengagement de la languette de fixation hors du logement de réception.

2. Véhicule selon la revendication 1, **caractérisé en ce que** les premiers éléments de fixation et/ou les deuxièmes éléments de fixation sont configurés de sorte à se déformer élastiquement, depuis une configuration naturelle occupée en cas de coopération entre les premiers et deuxièmes éléments de fixation, d'une manière assurant un l'interruption de ladite coopération entre les éléments premiers et deuxièmes éléments de fixation dès qu'un effort supérieur à la valeur seuil est appliqué à la tablette.

3. Véhicule selon l'une des revendications 1 et 2, **caractérisé en ce que** les premiers et deuxièmes éléments de fixation sont configurés de sorte à réaliser un montage de la tablette la laissant libre à pivotement par rapport au véhicule dans les deuxièmes éléments de fixation.

4. Véhicule selon l'une des revendications 1 à 3, **caractérisé en ce que** les premiers et deuxièmes éléments de fixation sont configurés de sorte à assurer un montage réversible de la tablette de sorte que la tablette peut être libérée complètement des deuxièmes éléments de fixation indépendamment dudit effort appliqué à la tablette.

5. Véhicule selon l'une des revendications précédentes, **caractérisé en ce que** le logement comprend une empreinte (23) et **en ce que** la languette présente une saillie (24), la saillie et l'empreinte présentant des formes complémentaires telle que la saillie de la languette vient se loger dans l'empreinte du logement dans une première configuration angulaire donnée de la tablette par rapport au véhicule destinée à être occupée en cas de fermeture d'un hayon du véhicule.

6. Véhicule selon l'une des revendications précédentes, **caractérisé en ce que** la tablette comprend les premiers éléments de fixation appartenant au système de montage, ces premiers éléments de fixation étant configurés pour assurer une liaison escamotable par rapport aux deuxièmes éléments de fixation solidaires du véhicule pour tout effort appliqué à la tablette ayant une valeur supérieure à ladite valeur seuil prédéterminée.

7. Véhicule selon la revendication 6, **caractérisé en ce que** la tablette comprend un élément occultant (13) souple fixé, sur un premier bord longitudinal de la tablette, à un élément rigide de support (14) tel qu'une barre, et encadré sur le reste de son pourtour par un cadre (15) élastiquement déformable agencé le long des bords transversaux opposés et du deuxième bord longitudinal de la tablette.

8. Véhicule selon la revendication 7, **caractérisé en ce que** les premiers éléments de fixation sont agencés au niveau des extrémités transversales opposées de l'élément rigide de support, de sorte à être destinés à coopérer avec les deuxièmes éléments de fixation aménagés sur les parois latérales du coffre en regard l'une de l'autre transversalement au véhicule.

9. Véhicule selon l'une des revendications 7 et 8, **caractérisé en ce que** la tablette comprend un élément d'accrochage (16), notamment agencé sur le deuxième bord longitudinal de la tablette, destiné à être raccordé au hayon du véhicule pour réaliser une liaison de la tablette au hayon configurée de telle sorte qu'un soulèvement du hayon provoque un pivotement de la tablette, à partir de ladite première configuration angulaire vers une deuxième configuration angulaire, par rapport aux deuxièmes éléments de fixation autour d'un axe (D) passant par l'élément rigide de support.

## Patentansprüche

1. Kraftfahrzeug mit einer Anordnung, umfassend:
- eine einziehbare zentrale Abdeckung (10), die dazu bestimmt ist, einen heckseitigen Kofferraum des Kraftfahrzeugs zumindest teilweise abzudecken, und
- ein System zur Montage der Abdeckung, wobei das System erste Befestigungselemente (11), die fest mit der Abdeckung verbunden sind, und zweite Befestigungselemente (12), die fest mit dem Fahrzeug verbunden sind, umfasst, wobei die ersten und zweiten Elemente untereinander so zusammenwirken, dass sie ein Halten der Abdeckung relativ zum Fahrzeug im Abstand von einem Kofferraumboden gewährleisten, wobei das Montagesystem so ausgebildet ist, dass es das Zusammenwirken zwischen den ersten und zweiten Befestigungselementen automatisch beendet, um die Abdeckung freizugeben, wenn auf die Abdeckung eine Kraft über einem vorgegebenen Grenzwert ausgeübt wird, der so gewählt ist, dass garantiert ist, dass das Ausüben einer Kraft auf die Abdeckung entlang einer Richtung, die im Betrieb entlang der dem Fahrzeug zugeordneten vertikalen Richtung ausgerichtet ist, nach unten gerichtet ist und geringer als der Grenzwert ist, die Abdeckung nicht zerstört, wobei das Fahrzeug **dadurch gekennzeichnet ist, dass** die ersten Befestigungselemente mindestens eine Befestigungslasche (18) aus elastisch verformbarem Material umfassen, die in einen entsprechenden zu den zweiten Befestigungselementen gehörenden Aufnahmeraum (19) eingeführt ist, wobei der Elastizitätsmodul des Materials, aus dem die Befestigungslasche besteht, so ausgebildet ist, dass das Ausüben einer Kraft, die größer als oder gleich dem Grenzwert ist, auf die Abdeckung eine elastische Verformung der Befestigungslasche bewirkt, die ein Lösen der Befestigungslasche aus dem Aufnahmeraum bewirkt.

2. Fahrzeug nach Anspruch 1, **dadurch gekennzeichnet, dass** die ersten Befestigungselemente und/oder die zweiten Befestigungselemente so ausgebildet sind, dass sie sich von einer natürlichen Konfiguration aus, die im Fall des Zusammenwirkens zwischen den ersten und zweiten Befestigungselementen eingenommen wird, elastisch so verformen, dass eine Unterbrechung des Zusammenwirkens zwischen den ersten und zweiten Befestigungselementen gewährleistet ist, sobald eine Kraft über dem Grenzwert auf die Abdeckung ausgeübt wird.

3. Fahrzeug nach einem der Ansprüche 1 und 2, **dadurch gekennzeichnet, dass** die ersten und zweiten Befestigungselemente so ausgebildet sind, dass eine Montage der Abdeckung ausgeführt wird, bei der man sie in Bezug auf das Fahrzeug in den zweiten Befestigungselementen frei schwenken lässt.

4. Fahrzeug nach einem der Ansprüche 1 bis 3, **dadurch gekennzeichnet, dass** die ersten und zweiten Befestigungselemente so ausgebildet sind, dass eine reversible Montage der Abdeckung gewährleistet ist, so dass die Abdeckung unabhängig von der auf die Abdeckung ausgeübten Kraft vollständig aus den zweiten Befestigungselementen freigegeben werden kann.

5. Fahrzeug nach einem der vorhergehenden Ansprüche, **dadurch gekennzeichnet, dass** die Aufnahme eine Ausnehmung (23) umfasst und dass die Lasche einen Vorsprung (24) aufweist, wobei der Vorsprung und die Ausnehmung komplementäre Formen aufweisen, so dass der Vorsprung der Lasche in der Ausnehmung der Aufnahme in einer ersten gegebenen Winkelkonfiguration der Abdeckung in Bezug auf das Fahrzeug, die sie im Fall des Schließens einer Heckklappe des Fahrzeugs einzunehmen bestimmt ist, aufgenommen wird.

6. Fahrzeug nach einem der vorhergehenden Ansprüche, **dadurch gekennzeichnet, dass** die Abdeckung die ersten Befestigungselemente umfasst, die zum Montagesystem gehören, wobei diese ersten Befestigungselemente so ausgebildet sind, dass sie bei jeder auf die Abdeckung ausgeübten Kraft, deren Wert über dem vorgegebenen Grenzwert liegt, eine einziehbare Verbindung in Bezug auf die zweiten Befestigungselemente, die fest mit dem Fahrzeug verbunden sind, gewährleisten.

7. Fahrzeug nach Anspruch 6, **dadurch gekennzeichnet, dass** die Abdeckung ein flexibles Abdeckelement (13) umfasst, das an einem ersten Längsrand der Abdeckung an einem starren Tragelement (14) wie einem Stab befestigt ist und an seinem restlichen Umfang durch einen elastisch verformbaren Rahmen (15) eingefasst wird, der entlang der entgegengesetzten Querränder und des zweiten Längsrandes der Abdeckung angeordnet ist.

8. Fahrzeug nach Anspruch 7, **dadurch gekennzeichnet, dass** die ersten Befestigungselemente auf Höhe der entgegengesetzten Querenden des starren Tragelements angeordnet sind, so dass sie dazu bestimmt sind, mit den zweiten Befestigungselementen, die an den Seitenwänden des Kofferraums einander quer zum Fahrzeug gegenüberliegend angeordnet sind, zusammenzuwirken.

9. Fahrzeug nach einem der Ansprüche 7 und 8, **dadurch gekennzeichnet, dass** die Abdeckung ein Einhängelement (16) umfasst, das insbesondere am zweiten Längsrand der Abdeckung angeordnet ist und dazu bestimmt ist, mit der Heckklappe des Fahrzeugs verbunden zu werden, um eine Verbindung der Abdeckung mit der Heckklappe auszuführen, die so ausgebildet ist, dass ein Anheben der Heckklappe ein Schwenken der Abdeckung aus der ersten Winkelkonfiguration in eine zweite Winkelkonfiguration in Bezug auf die zweiten Befestigungselemente um eine Achse (D) bewirkt, die durch das starre Tragelement verläuft.

## Claims

1. Motor vehicle comprising an arrangement comprising:
- a retractable luggage cover (10) designed to cover a rear luggage compartment of the motor vehicle, at least in part, and
- a system for mounting the luggage cover,
the system comprising first attachment elements (11) integral with the luggage cover and second attachment elements (12) integral with the vehicle, the first and second elements interacting with one another such as to ensure that the luggage cover is held, relative to the vehicle, at a distance from a luggage compartment floor, the mounting system being configured such as to automatically end interaction between the first and second attachment elements in order to release the luggage cover in the event of the application to the luggage cover of a force in excess of a predetermined threshold value chosen such as to guarantee that the application to the luggage cover of any force in a direction oriented, during functioning, in the vertical direction associated with the vehicle, directed downwards and below said threshold value does not damage the luggage cover, the vehicle being **characterized in that** the first attachment elements comprise at least one attachment tab (18) made from an elastically deformable material engaged in a corresponding receiving housing (19) belonging to the second attachment elements, the modulus of elasticity of the constituent material of said attachment tab being configured such that the application to the luggage cover of a force in excess of or equal to said threshold value gives rise to an elastic deformation of said attachment tab, ensuring disengagement of the attachment tab outside of the receiving housing.

2. Vehicle according to Claim 1, **characterized in that** the first attachment elements and/or the second attachment elements are configured such as to deform elastically, from a natural configuration occupied in the event of interaction between the first and second attachment elements, in a manner ensuring interruption of said interaction between the first elements and second attachment elements when a force in excess of the threshold value is applied to the luggage cover.

3. Vehicle according to one of Claims 1 and 2, **characterized in that** the first and second attachment elements are configured such as to mount the luggage cover, leaving it free to pivot relative to the vehicle in the second attachment elements.

4. Vehicle according to one of Claims 1 to 3, **characterized in that** the first and second attachment elements are configured such as to reversibly mount the luggage cover such that the luggage cover may be completely released from the second attachment elements independently of said force applied to the luggage cover.

5. Vehicle according to one of the preceding claims, **characterized in that** the housing comprises an indentation (23), and **in that** the tab has a projection (24), the projection and the indentation having complementary forms such that the projection of the tab is housed in the indentation of the housing in a given first angular configuration of the luggage cover relative to the vehicle designed to be occupied in the event of closure of a hatch of the vehicle.

6. Vehicle according to one of the preceding claims, **characterized in that** the luggage cover comprises the first attachment elements belonging to the mounting system, these first attachment elements being configured to ensure a retractable link relative to the second attachment elements integral with the vehicle in the case of any force applied to the luggage cover having a value in excess of said predetermined threshold value.

7. Vehicle according to Claim 6, **characterized in that** the luggage cover comprises a flexible concealing element (13) fixed, on a first longitudinal edge of the luggage cover, to a rigid support element (14), such as a bar, and framed on the remainder of its periphery by an elastically deformable frame (15) arranged along the opposite transverse edges and the longitudinal second edge of the luggage cover.

8. Vehicle according to Claim 7, **characterized in that** the first attachment elements are arranged at the opposite transverse ends of the rigid support element such as to be designed to interact with the second attachment elements provided on the lateral walls of the luggage compartment facing one another transversely to the vehicle.

9. Vehicle according to one of Claims 7 and 8, **characterized in that** the luggage cover comprises a hooking element (16), in particular arranged on the second longitudinal edge of the luggage cover, designed to be attached to the hatch of the vehicle in order to form a link between the luggage cover and the hatch configured such that raising the hatch gives rise to pivoting of the luggage cover, from said first angular configuration to a second angular configuration, relative to the second attachment elements around an axis (D) passing through the rigid support element.
